# EUROPÄISCHE PATENTANMELDUNG

(11) **EP 1 057 909 A1**
(43) Veröffentlichungstag der Anmeldung: **06.12.2000**
(21) Anmeldenummer: 99110353.2
(22) Anmeldetag: 28.05.1999
(51) Int. Cl.: D01H 11/00, B01D 50/00

(54) **Staubabscheider**

(71) Anmelder: ZELLWEGER LUWA AG, 8610 Uster (CH)
(72) Erfinder: Keller, Arnold, Ch-8143 Stallikon (CH); Gehrig, Walter, CH-5621 Zufikon (CH)
(74) Vertreter: Patentanwälte Schaad, Balass, Menzl & Partner AG

(57) **Zusammenfassung**

Der Staubabscheider ist mit einem Eingangsrohr (4) für den Eintritt eines Luftstromes, einer Filterkammer, einem End-filter (13) und einem Abgangsstück (9) für den Austritt von Staub, Partikel usw. versehen. Der Filter (13) ist in einer Hauptkammer (1) angeordnet, die mit einem eine Deponierkammer (8) bildenden Unterbau (2) verbunden ist und eine kegelstumpfförmige Aussenwand aufweist, an die das Eingangsrohr (4) für den Eintritt des Luftstromes (5) exzentrisch gegenüber der Symmetrieachse (3) der Hauptkammer (1) angeschlossen ist. Das Abgangsstück (9) ist mit dem Unterbau (2) verbunden. Die Hauptkammer (1) des Staubabscheiders ist derart ausgebildet, dass ihr Durchmesser nach unten grösser wird.

## Beschreibung

Die vorliegende Erfindung betrifft einen Staubabscheider nach dem Oberbegriff des Patentanspruchs 1.

Aus der Patentschrift EP 0 646 192 B1 beispielsweise ist eine Anlage zur Beeinflussung der Umgebungsbedingungen von Textilmaschinen bekannt, die mit einer oberhalb der Textilmaschinen verlaufenden Fahrbahn und mehreren sich auf der Fahrbahn bewegenden Wanderreinigern ausgerüstet ist, die zusammen mit Ventilatoren, Blasdüsen, Rohrarmen usw. arbeiten.

Es ist nun Aufgabe der Erfindung, einen verbesserten Staubabscheider, insbesondere für Wanderreiniger für Textilmaschinen zu schaffen.

Diese Aufgabe wird in vorteilhafter Weise erfindungsgemäss durch einen Staubabscheider nach Patentanspruch 1 gelöst.

Andere vorteilhafte Ausführungen der Erfindung ergeben sich aus den weiteren abhängigen Ansprüchen.

Ein Beispiel der Erfindung wird nachfolgend an Hand von Zeichnungen näher erläutert. Es zeigen:
- Fig. 1: eine schematische seitliche Darstellung eines Staubabscheiders nach der Erfindung,
- Fig. 2: eine Draufsicht eines solches Staubabscheiders,
und
- Fig. 3: einen Schnitt durch die Linie A -A in Fig. 2.

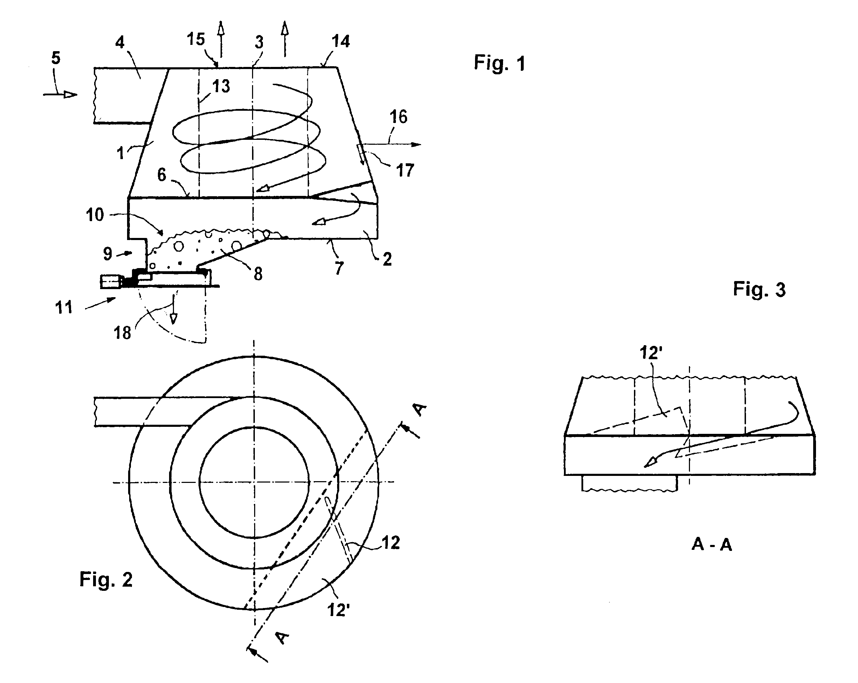

Der Staubabscheider nach Fig 1 besteht im wesentlichen aus einer Hauptkammer 1 mit einem zylindrischen Unterbau 2, wobei der maximale Durchmesser der Hauptkammer 1 dem Zylinderdurchmesser des Unterbaus 2 entspricht, so dass sie grundsätzlich eine gemeinsame Symmetrieachse 3 aufweisen. Die zumindest innenseitig kegelstumpfförmig ausgebildete Aussenwand der Hauptkammer 1 ist rundum geschlossen mit Ausnahme eines relativ kleinen oberen Bereichs, wo ein kanalförmiges Eingangsrohr 4 mit einer Eingangsöffnung für den Eintritt eines Luftstromes 5 exzentrisch (Fig. 2) gegenüber der Symmetrieachse 3 angeordnet ist. Die kanalförmige Partie 4 kann auch bei einem mittleren Bereich der Hauptkammer 1 kommunizieren, und zwar vorzugsweise in einem Winkel, vorzugsweise gegen oben gerichtet, statt horizontal wie in Fig. 1 dargestellt. Die Hauptkammer 1 ist durch einen inneren Zwischenboden 6 vom Unterbau 2 getrennt, wobei dieser ebene Zwischenboden 6 auch Kegelboden genannt wird. Der Unterbau 2 bildet somit eine relativ flache durch einen Grundboden 7 abgeschlossene Deponierkammer 8. Der Boden 7 weist eine durch ein kanalförmiges Abgangsstück 9 abgeschlossene Öffnung 10 auf. Das Abgangsstück 9, das auch als Auslasskasten ausgebildet sein kann, umfasst ein Absperrorgan 11, beispielsweise in Form einer Klappe.

Aus Fig. 3 ist ersichtlich, dass der Zwischenboden 6 ein Blech mit einer Schlitzöffnung 12 sein oder umfassen kann, wobei ein in Strömungsrichtung gesehen (vergleiche Pfeile in Fig. 1 und 2) an der Schlitzöffnung stromabwärts anschliessender Teil 12' dieses Blechs nach oben und ein stromaufwärts liegendes Teil nach unten gebogen ist. Durch den derart aufgeklappten als Prallblech dienenden Bereich 12' entsteht ein Durchgang für Staub und Partikel von der Hauptkammer 1 zur Deponierkammer 8. Im Innern der Hauptkammer 1 ist konzentrisch zur Symmetrieachse 3 ein hohlzylinderförmiger Endfilter 13 mit Hilfe von geeigneten in den Figuren nicht dargestellten Befestigungsmitteln fixiert. Der Endfilter kann beispielsweise ein Lochblech und/oder Vlies und/oder Faltenfilter usw. umfassen.

Wie aus Fig. 1 ersichtlich, verjüngt sich die kegelstumpfförmige Hauptkammer 1 nach oben, wo ihr oberer Rand mit einer horizontalen ringförmigen Deckwand 14 verbunden ist, die eine innere runde Öffnung 15 aufweist, deren Durchmesser dem Durchmesser des zylinderförmigen Endfilters 13 entspricht. Die Öffnung 15 kann beispieslwese durch ein metallisches Maschengewebe abgedeckt bzw. geschützt sein.

Der Staubabscheider nach den Figuren 1 bis 3 funktioniert folgendermassen:

Durch das Eingangsrohr 4 wird Luft eingeblasen und/oder durch die Öffnung 15 Luft abgesaugt. Dadurch entsteht der eintretende Luftstrom 5, der vorgängig unsaubere Gegenstände berührt hat und daher Staub, Schmutzpartikel usw. mit sich trägt. Da der Eintritt 4 exzentrisch angeordnet ist, entsteht ein Luftwirbel und somit eine Rotationsbewegung der Partikel, die auf die innere Seite der kegelstumpfförmigen Hauptkammer 1 mit einer Zentrifugalkraft 16 aufprallen. Im Gegensatz zur traditionellen Zyklontechnik, bei der der Durchmesser einer Filterkammer nach unten kleiner wird, ist die Hauptkammer 1 des Staubabscheiders nach der vorliegenden Erfindung derart ausgebildet, dass zumindest der Durchmesser (Fig. 1) ihrer Innenwand nach unten grösser wird. Die gemäss Fig. 1 geneigte Innenwand der Hauptkammer 1 bewirkt, dass durch eine nach unten geneigte Kraftkomponente 17 vor allem die schweren Partikel schneller nach unten gedrängt werden. Die Partikel gelangen somit innerhalb kurzer Zeit nach Eintritt in den Abscheider an den Kegelboden 6 und durch die Schlitzöffnung 12 (Fig. 2) am aufgeklappten Blech 12' (Fig. 3) in die Deponierkammer 8. Die in der Hauptkammer 1 rotierende Luft verlässt bei sich in Schliessstellung befindendem Absperrorgan 11 den Abscheider durch die Löcher bzw. Poren des Filters 13 und durch die Öffnung 15 nach oben. Um Luftverluste zu vermeiden, kann zwischen dem oberen Ende des Filters 13 und der Deckwand 14 ein Dichtungsring vorgesehen sein.

Der Abgang bzw. der Filterrückstand kann in zeitlichen Intervallen durch eine aktive an das Abgangsstück 9 angeschlossene Absaugung oder mit dem eigenen Luftstrom 5 entsorgt bzw. aus dem Speicherbehälter ausgetragen werden. Im Gegensatz zur traditionellen Zyklontechnik haben eventuell auszuscheidende Faserknäuel und Partikelagglomerate eine relativ kurze Verweilzeit in der Hauptkammer 1, in welcher sie sich beispielsweise in ihre Einzelfragmente zerlegen können.

Für den nachgeschalteten Filter 13 gibt es verschiedene Reinigungsmöglichkeiten, wie eine Auswechslung des Filtermediums nach Erreichung der Standzeit und/oder eine Druckluftbeblasung von der sauberen Filterseite und/oder eine Spülreinigung, falls bei einer aktiven Absaugung der sogenannte Volumenstrom 18 am Abgangsstück 9 grösser als der Eingangs-Volumenstrom 5 ist.

Der Einsatz des erfindungsgemässen Abscheiders in verschiedenen Baugrössen erstreckt sich über alle Anwendungsgebiete, insbesondere der textilen Fertigung für das Ausscheiden von Fasern und Staub aus der Luft als Trägermedium. Bei einer Anwendung in Wanderreinigern kann die nach oben austretende filtrierte Luft zusätzlich als Deckenbeblasung bzw. als Abreinigung von Deckelementen, wie Lampen, Auslässen usw. genutzt werden.

## Patentansprüche

1. Staubabscheider mit einer Eingangsöffnung für den Eintritt eines Luftstromes, einer Filterkammer, einem Filter, einer Ausgangsöffnung für den gereinigten Luftstrom und einem Abgangsstück für das ausgefilterte Material, **dadurch gekennzeichnet,** dass der Filter (13) in einer Hauptkammer (1) angeordnet ist, deren Aussenwand innenseitig in Form eines zumindest angenähert sich nach oben verjüngenden Kegelstumpfs ausgebildet ist.

2. Staubabscheider nach Anspruch 1, **dadurch gekennzeichnet**, dass die Hauptkammer mit einem eine Deponierkammer (8) bildenden Unterbau (2) verbunden ist und eine Aussenwand aufweist, an die ein Eingangsrohr (4) für den Eintritt des Luftstromes (5) exzentrisch gegenüber einer Referenzachse (3) der Hauptkammer (1) angeschlossen ist, und dass der Unterbau (2) das mit einem Absperrorgan (11) versehene Abgangsstück (9) umfasst.

3. Staubabscheider nach Anspruch 1 oder 2, **dadurch gekennzeichnet**, dass die Hauptkammer (1) und der Unterbau (2) einen im wesentlichen runden Querschnitt und eine gemeinsame Referenzachse (3) aufweisen, wobei der maximale Durchmesser der Hauptkammer (1) dem Zylinderdurchmesser des Unterbaus (2) entspricht.

4. Staubabscheider nach einem der Ansprüche 1 bis 3, **dadurch gekennzeichnet,** dass die Hauptkammer (1) durch einen inneren Zwischenboden (6) vom Unterbau (2) getrennt ist.

5. Staubabscheider nach einem der Ansprüche 1 bis 4, **dadurch gekennzeichnet**, dass das Eingangsrohr (4) kanalförmig ausgebildet ist.

6. Staubabscheider nach Anspruch 4 oder 5, **dadurch gekennzeichnet**, dass der Zwischenboden (6) einen geneigten Bereich (12') mit einer Schlitzöffnung (12) aufweist, die einen Durchgang für Staub bzw. andere Partikel von der Hauptkammer (1) zur Deponierkammer (8) bildet.

7. Staubabscheider nach einem der Ansprüche 1 bis 6, **dadurch gekennzeichnet**, dass der Filter (13) zylinderförmig ausgebildet und vertikal im Innern der Hauptkammer (1) angeordnet ist, deren Aussenwand vorzugsweise auch in Form eines zumindest angenähert sich nach oben verjüngenden Kegelstumpfs ausgebildet ist.

8. Staubabscheider nach Anspruch 7, **dadurch gekennzeichnet**, dass der obere Rand der Hauptkammer (1) mit einer horizontalen ringförmigen Deckwand (14) verbunden ist, die die zentrale, runde Ausgangsöffnung (15) aufweist, deren Durchmesser dem Durchmesser des zylinderförmigen Filters (13) wenigstens annähernd entspricht, und dass vorzugsweise, um die vorgereinigte Luft dem nachfolgenden Filter (13) ohne Luftverlust zuzuführen, zwischen dem oberen Ende des Filters (13) und der Deckwand (14) ein Dichtungsring vorgesehen ist.

9. Staubabscheider nach einem der Ansprüche 1 bis 8, **dadurch gekennzeichnet**, dass der Filter (13) ein Lochblech und/oder Vlies und/oder Faltenfilter usw. umfasst.

10. Wanderreiniger mit einem Staubabscheider nach einem der Ansprüche 1 bis 9, **dadurch gekennzeichnet**, dass er in einer Anlage zur Beeinflussung der Umgebungsbedingungen von Textilmaschinen eingesetzt wird, die mit einer oberhalb der Textilmaschinen verlaufenden Fahrbahn ausgerüstet ist, und dass vorzugsweise der Staubabscheider zusätzlich zur Deckenbeblasung bzw. zur Abreinigung von Deckenelementen ausgebildet ist.
